**Europäisches Patentamt**

(19) **European Patent Office**

**Office européen des brevets**

(11) Veröffentlichungsnummer: **0 117 586**
**B1**

(12) # EUROPÄISCHE PATENTSCHRIFT

(45) Veröffentlichungstag der Patentschrift:
**13.05.87**

(51) Int. Cl.⁴: **B 01 D 21/01,** B 05 D 1/00,
C 09 K 3/32

(21) Anmeldenummer: **84200229.7**

(22) Anmeldetag: **18.02.84**

(54) **Verfahren zum Koagulieren und Abscheiden der Reste von High-Solids-Lacken.**

(30) Priorität: **23.02.83 US 467282**

(43) Veröffentlichungstag der Anmeldung:
**05.09.84 Patentblatt 84/36**

(45) Bekanntmachung des Hinweises auf die Patenterteilung:
**13.05.87 Patentblatt 87/20**

(84) Benannte Vertragsstaaten:
**DE FR IT NL**

(56) Entgegenhaltungen:
DE - A - 1 517 409
DE - A - 2 837 356
DE - B - 1 642 853
DE - B - 1 642 854
DE - B - 2 503 347
JP - A - 53 044 493
US - A - 1 899 610

(73) Patentinhaber: **METALLGESELLSCHAFT AG,**
**Reuterweg 14 Postfach 3724, D-6000 Frankfurt/M.1 (DE)**
(84) Benannte Vertragsstaaten: **DE IT NL**

(73) Patentinhaber: **Société Continentale Parker, 51, Rue**
**Pierre, F-92111 Clichy (FR)**
(84) Benannte Vertragsstaaten: **FR IT**

(72) Erfinder: **Murphy, Donald P., 30100 Manor Drive, Madison**
**Heights, MI 48071 (US)**

(74) Vertreter: **Rieger, Harald, Dr., Reuterweg 14,**
**D-6000 Frankfurt am Main (DE)**

## Beschreibung

Die Erfindung betrifft ein Verfahren zum Koagulieren und Abschneiden der Reste von high-solids-Lacken aus alkalischen, wässrigen Umlaufflüssigkeiten von Farbnebel-Nassabscheide-Systemen.

In der Lackiertechnik ist es üblich, Spritzkabinen und -stände mit Wasser zu berieseln, um entstehende Lacknebel abzufangen. Um eine Verstopfung der Pumpen und Ableitungsrohre zu verhindern, setzt man dem Wasser Mittel zu, die eine Koagulierung und Abscheidung der lackteilchen bewirken sollen. Bekannte Lackausscheidungsmittel sind alkalisch reagierende Stoffe, insbesondere anorganischer Art, wie Ätzalkali, Alkaliphosphate, Alkalisilikate, Alkalicarbonate, Erdalkalisalze usw. Gelegentlich werden auch organische Basen, wie Äthanolamin, Morpholin und dergl. für diesen Zweck eingesetzt.

Spezielle alkalische Lacksusscheidungslösungen enthalten als organische Komponente umhüllende Polymere mit einem Molekulargewicht von mindestens 1000, deren monomere Einheiten ausser Kohlenstoff und Wasserstoff andere Atome, vorzugsweise Sauerstoff und/oder Stickstoff, enthalten, insbesondere Polyamin, Polyacrylamid, Polyacrylat, Polymethacrylat oder Polyoxyäthylen-Verbindung (DE - B - 16 42 853). Weiterhin ist es bekannt, als Zusatz zu wässrigen, vorzugsweise alkalischen, Lackausscheidungsmitteln eine Mischung aus mindestens einem aliphatischen oder aromatischen Kohlenwasserstoff, der hinsichtlich Dampfdruck und Siedepunkt bestimmte Eigenschaften aufweisen muss, und einem nichtionogenen Emulgiermittel, zu verwenden (DE - B - 16 42 854).

Aus der DE - A - 15 17 409 ist es bekannt, Spülflüssigkeiten zur Koagulierung von Lack- und Grundierungsmittelteilchen auf Basis wasserlöslicher Alkali- und/oder Erdalkalisalze in Wasser schwerlösliche, Hydroxide, wie Magnesium-, Eisen-, Aluminium- und Chromhydroxid, vorzugsweise jedoch Calciumhydroxid, sowie ein Amin oder eine Mischung von Aminen zuzusetzen.

Das Lackkoagulierungsmittel gemäss DE - B - 25 03 347 auf Basis von Alkalisilikaten, -carbonaten-, phosphaten und/oder -hydroxiden sowie Netzmitteln und Füllstoffen enthält mindestens einen Teil dieser Füllstoffe in hydrophobierter, in Wasser und Lacklösungsmitteln unlöslicher Form. Als ein derartig hydrophobierter Füllstoff ist neben zahlreichen anderen auch Talk genannt.

Bei der Spritzlackierung mit Lacken auf Wasserbasis werden gemäss JP - A - 53-44493 Umlaufflüssigkeiten eingesetzt, die eine oder mehrere Art(en) von Oxiden oder Hydroxiden von Metallen der Gruppe 2A des Periodensystems der Elemente, insbesondere Calciumoxid oder -hydroxid, enthalten. Dabei soll deren Gehalt 0,2 bis 0,5 Gew.-% – bezogen auf die gesamte umlaufende Wassermenge – betragen.

Im allgemeinen schwimmen in der Umlaufflüssigkeit die vom Wasser eingefangenen Lackreste auf und können in einfacher Weise entfernt werden.

Während die vorgenannten und bekannten Abscheide-Systeme zufriedenstellende bis gute Ergebnisse bei der Koagulierung und Abscheidung konventioneller, lösungsmittelverdünnter Lacke liefern, sind sie unwirksam und unbefriedigend, wenn sie zur Behandlung sogenannter feststoffreicher bzw. lösungsmittelarmer Lacke (high-solids-Lacke) eingesetzt werden sollen. Derartige Lacke mit Feststoffgehalten von 50 oder 60 Gew.-% und mehr gewinnen wegen der verringerten Lösungsmittelemission aus Gründen des Umweltschutzes zunehmend an Bedeutung. Ihre zur Spritzanwendung geeignete Viskosität erhalten sie durch Polymere, die – gegenüber konventionellen Lacken – niedrigere Molekulargewichte aufweisen, dafür aber zu besonderer Klebrigkeit neigen und schwierig in der Umlaufflüssigkeit der Nassabscheide-Systeme zu koagulieren bzw. abzuscheiden sind. Zur Technologie der Beschichtung mit feststoffreichen Lacken wird verwiesen auf: Robert N. Price, «High-Solids Coatings: Past, Present, Future», American Paint and Coatings Journal, June 21, 1982: John C. Dean, «High-Solids Coatings», Modern Paint and Coatings, March 1982: Dolanld E. Brody, «Trends in Water-Borne, High-Solids Coatings», American Paint and Coatings Journal, July 12, 1982, and Dr. R. R. Kuhn et al, «High-Solids Acrylic Resins for Baking Enamels», Modern Paint and Coatings, April 1981.

Erfahrungsgemäss ist praktisch nicht abschätzbar, ob und welche für konventionelle Lacke geeignete Koagulierungsmittel auch gegenüber sogenannten high-solids-Lacken wirksam sind.

Die Aufgabe der Erfindung besteht darin, ein Verfahren zum Koagulieren und Abscheiden von Lackresten bereitzustellen, das speziell für feststoffreiche Lacke (high-solids-Lacke) geeignet ist.

Die Aufgabe wird gelöst, indem das eingangs genannte Verfahren entsprechend der Erfindung derart ausgestaltet wird, dass man als Umlaufflüssigkeit eine Dispersion von Talk mit einer Teilchengrösse kleiner als 15 µm einsetzt.

Mit Hilfe des erfindungsgemässen Verfahrens gelingt es, Reste feststoffreicher Lacke, die von der Umlaufflüssigkeit aufgenommen werden, in Koagulate mit fensterkittähnlicher Beschaffenheit zu überführen. In beruhigten Bereichen des Nassabscheide-Systems schwimmen die koagulierten Lackreste auf und können ohne Schwierigkeit, z.B. durch Abstreifen, entfernt werden. Eine Ansammlung von Lackresten an Wänden, sonstigen Oberflächen oder im Leitungssystem des Nassabscheide-Systems ist deutlich verringert, so dass die Wirksamkeit und Einsatzdauer der eingesetzten Einrichtung wesentlich erhöht und Betriebsunterbrechungen zur Pflege und Reinigung erheblich verringert sind.

Talk mit einer Teilchengrösse kleiner als 15 µm hat sich insofern als besonders zweckmässig erwiesen, als beispielsweise bei Verwendung von Talk einer Teilchengrösse von lediglich kleiner als

3    0 117 586    4

30 μm nicht so günstige Koaguliereffekte erzielt werden.

Der Gehalt an Koaguliermittel in der Umlaufflüssigkeit ist abgängig von der Menge des aufgenommenen Lackes und der Art des eingesetzten Lackes.

Den herrschenden Bedingungen wird üblicherweise gerecht, wenn in bevorzugter Ausgestaltung der Erfindung als Umlaufflüssigkeit eine Dispersion, die Talk in einer Menge von 1,2 bis 24,0 g/l enthält, eingesetzt wird.

Eine insoweit besonders vorteilhafte Ausgestaltung sieht vor, als Umlaufflüssigkeit eine Dispersion, die Talk in einer Menge von 4,8 bis 12,0 g/l enthält, einzusetzen.

Eine Weiterbildung der Erfindung besteht darin, als Umlaufflüssigkeit eine Dispersion, die zusätzlich wasserlösliche Polyhydroxyverbindungen, insbesondere Alkylenglykol, wie Äthylenglykol, enthält, einzusetzen.

Die Menge an Polyhydroxyverbindungen sollte zweckmässigerweise bis 40 Gew.-%, insbesondere 15 bis 25 Gew.-% – bezogen auf die Mischung mit dispergierbarem Feststoff –, betragen.

Durch den Zusatz von Polyhydroxyverbindung wird die Dispergierbarkeit des Koaguliermittels in der Umlaufflüssigkeit erheblich erleichtert.

Im erfindungsgemässen Verfahren können die sonst üblichen Additive, sofern sie mit dem Koagulationsmittel und der gegebenenfalla verwendeten Polyhydroxyverbindung verträglich sind, ebenfalls mitverwendet werden. Es handelt sich dabei um Antischaummittel, Korrosionsschutzmittel und dergl., die in den üblichen Mengen zugemischt werden.

Die Erfindung wird anhand des folgenden Beispiels beispielsweise und näher erläutert.

Beispiel

In einer Laboratoriums-Sprühkabine, die senkrechte, mit einer Umlaufflüssigkeit berieselte Wände aufweist, wurden Vergleichsversuche unter Verwendung eines Lackes der Firma INMONT CORPORATION (Bezeichnung U 28RK010) durchgeführt.

Talk, der zu 95 Gew.-% eine Teilchengrösse unterhalb 15 μm besass und in einer Konzentration von 4,8 g/l zur Anwendung kam, bewirkte hervorragende Koaguliergebnisse.

Wurde hingegen eine Umlaufflüssigkeit eingesetzt, die 1,2 bis 24 g/l einer üblichen alkalischen Substanz, wie Natronlauge, Natriummetasilikat, Natriumcarbonat oder Alkaliphosphat, enthielt, wurden kaum brauchbare Effekte hinsichtlich Koagulation erreicht.

Auch bei Verwendung einer Umlaufflüssigkeit, die Calciumoxid bzw. Calciumhydroxid oder Calciumcarbonat in einer Menge von 8,4 bis 12,0 g/l enthielt, wurde eine nur zufriedenstellende bis gute Koagulierung des in den Flüssigkeitsvorhang gesprühten Lackes festgestellt. Zinkstearat – in einer Konzentration von 6,0 g/l eingesetzt – erbrachte ebenfalls nur zufriedenstellende Ergebnisse.

## Patentansprüche

1. Verfahren zum Koagulieren und Abscheiden der Reste von high-solids-Lacken aus alkalischen, wässrigen Umlaufflüssigkeiten von Farbnebel-Nassabscheide-Systemen, dadurch gekennzeichnet, dass man als Umlaufflüssigkeit eine Dispersion von Talk mit einer Teilchengrösse kleiner als 15 μm einsetzt.

2. Verfahren nach Anspruch 1, dadurch gekennzeichnet, dass man als Umlaufflüssigkeit eine Dispersion, die Talk in einer Menge von 1,2 bis 24,0 g/l enthält, einsetzt.

3. Verfahren nach Anspruch 1 oder 2, dadurch gekennzeichnet, dass man als Umlaufflüssigkeit eine Dispersion, die Talk in einer Menge von 4,8 bis 12,0 g/l enthält, einsetzt.

4. Verfahren nach einem oder mehreren der Ansprüche 1, 2 oder 3, dadurch gekennzeichnet, dass man als Umlaufflüssigkeit eine Dispersion, die zusätzlich wasserlösliche Polyhydroxyverbindung, insbesondere Alkylenglykol, wie Äthylenglykol, enthält, einsetzt.

5. Verfahren nach Anspruch 4, dadurch gekennzeichnet, dass man als Umlaufflüssigkeit eine Dispersion, die die Polyhydroxyverbindung in einer Menge bis 40 Gew.-%, vorzugsweise in einer Menge von 15 bis 25 Gew.-% – bezogen auf die Mischung mit dispergierbarem Feststoff – enthält, einsetzt.

## Revendications

1. Procédé pour la coagulation et le dépôt des résidus de peintures à fortes teneurs en matières solides, à partir de liquides circulants aqueux, alcalins, de systèmes de dépôt humide de brouillard de pistolage, caractérisé en ce que l'on utilise, en tant que liquide circulant, une dispersion de talc ayant une taille de particules inférieure à 15 μm.

2. Procédé selon la revendication 1, carartérisé en ce que l'on utilise, en tant que liquide circulant, une dispersion qui contient du talc en une quantité allant de 1,2 à 24,0 g/litre.

3. Procédé selon la revendication 1 ou 2, caractérisé en ce que l'on utilise, en tant que liquide circulant, une dispersion qui contient du talc en une quantité allant de 4,8 à 12,0 g/litre.

4. Procédé selon une ou plusieurs des revendications 1, 2 ou 3, caractérisé en ce que l'on utilise, en tant que liquide circulant, une dispersion qui contient en outre un composé polyhydroxy soluble dans l'eau, en particulier un alkylèneglycol tel que l'éthylèneglycol.

5. Procédé selon la revendication 4, caractérisé en ce que l'on utilise, en tant que liquide circulant, une dispersion qui contient le composé polyhydroxy en une quantité allant jusqu'à 40% en poids, de préférence en une quantité allant de 15 à 25% en poids, par rapport au mélange formé avec la substance solide dispersable.

## Claims

1. Process for coagulating and depositing residues of high-solids paints from alkaline aqueous circulating liquids of paint spray-wet scrubbing-systems, characterized in that a despersion of talc

3

of a particle size less than 15 μm is used as a circulating liquid.

2. Process according to claim 1, characterized in that a dispersion is used as a circulating liquid containing talc in an amount of 1,2 to 24,0 g/l.

3. Process according to claim 1 or 2, characterized in that a dispersion is used as a circulating liquid containing talc in an amount of 4,8 to 12,0 g/l.

4. Process according to claim 1, 2 or 3, characterized in that a dispersion is used as a circulating liquid containing in addition water soluble polyhydroxy compound, in particular alkylene glycol, e.g. ethylene glycol.

5. Process according to claim 4, characterized in that a dispersion is used as a circulating liquid containing the polyhydroxy compound in an amount up to 40% by weight, in particular in an amount of 15 to 25% by weight calculated as the mixture with the dispersable solid.